(19) Europäisches Patentamt
European Patent Office
Office européen des brevets

(11) **EP 3 369 760 B1**

(12) **EUROPÄISCHE PATENTSCHRIFT**


(45) Veröffentlichungstag und Bekanntmachung des Hinweises auf die Patenterteilung:
**10.05.2023 Patentblatt 2023/19**

(21) Anmeldenummer: **17159168.8**

(22) Anmeldetag: **03.03.2017**

(51) Internationale Patentklassifikation (IPC):
***C08G 69/34*** *(2006.01)* ***C08L 77/08*** *(2006.01)*
***C08G 69/26*** *(2006.01)* ***B29C 45/00*** *(2006.01)*

(52) Gemeinsame Patentklassifikation (CPC):
**C08G 69/265; C08G 69/34; C08L 77/08**


(54) **MIKROWELLENBESTÄNDIGE FORMKÖRPER**

MICRO-WAVE RESISTANT MOULDED ARTICLE

ÉLÉMENT MOULÉ RÉSISTANT AU MICRO-ONDES


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.09.2018 Patentblatt 2018/36**



(73) Patentinhaber: **EMS-CHEMIE AG**
**7013 Domat/Ems (CH)**

(72) Erfinder:
- **AEPLI, Etienne**
**7013 Domat / Ems (CH)**
- **HOFFMANN, Botho**
**7013 Domat / Ems (CH)**
- **WIEDEMANN, Thomas**
**7013 Domat / Ems (CH)**

(74) Vertreter: **Pfenning, Meinig & Partner mbB**
**Patent- und Rechtsanwälte**
**Theresienhöhe 11a**
**80339 München (DE)**



(56) Entgegenhaltungen:
**EP-A1- 0 469 435** **EP-A1- 2 298 830**
**US-A- 4 740 377**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).


EP 3 369 760 B1

**Beschreibung**

Die vorliegende Erfindung betrifft die Verwendung einer amorphen oder mikrokristallinen Copolyamid-Formmasse zur Herstellung von mikrowellenbeständigen Formkörpern.

Im Stand der Technik sind bereits einige mikrowellenbeständige Kunststoff-Formkörper bzw. Formmassen beschrieben.

DE 199 10 948 A1 betrifft einen wärmeisolierten Kunstharzbehälter und einen wärmeisolierten Kunstharzdeckel. Bei dem wärmeisolierten Kunstharzbehälter ist eine wärmeisolierende Schicht in dem Raum zwischen dem inneren Behälter und dem äußeren Behälter ausgebildet, die mindestens ein Kunstharz umfassen, das ausgewählt ist aus der Gruppe bestehend aus Polyester, aromatischem Polyamid, Polyketon, Polyvinylidenfluorid, acrylonitrilartigem Harz und cycloolefinartigem Harz, wobei ein Gas mit einer geringeren Wärmeleitfähigkeit als Luft darin eingeschlossen ist. Ebenso ist bei dem wärmeisolierenden Kunstharzdeckel eine wärmeisolierende Schicht in dem Raum zwischen dem unteren Kunstharzdeckelelement und dem oberen Kunstharzdeckelelement ausgebildet. Der wärmeisolierende Kunstharzbehälter und - deckel können aus nur einer Art von Harz bestehen.

DE 3913114 A1 beschreibt wärmeformbeständige thermoplastische Formmassen aus Polycarbonaten auf Basis spezieller Dihydroxydiphenylcycloalkane und Silikonkautschuke, ein Verfahren zu ihrer Herstellung und ihre Verwendung zur Herstellung von Formkörpern. Gegenstand der Erfindung sind Mischungen aus a) 1 bis 99 Gew.-%, vorzugsweise 10 bis 90 Gew.-%, speziellen Polycarbonaten auf Basis von Dihydroxydiphenylcycloalkanen, b) 1 bis 99 Gew.-%, vorzugsweise 10 bis 90 Gew.-%, anderen Polycarbonaten, insbesondere solchen auf Basis von Bisphenol A und c) 1 bis 95 Gew.-%, vorzugsweise 2 bis 60 Gew.-%, insbesondere 3 bis 40 Gew.-%, Silikonkautschuken, insbesondere Silikonpfropfkautschuken.

DE 4401058 A1 betrifft Formmassen, die als wesentliche Komponenten A) 1 bis 50 Gew.-% Polyarylenether, in denen mindestens 0,03 Gew.-% aller Endgruppen Hydroxyendgruppen sind, B) 5 bis 94 Gew.-% Polyarylenether, in denen weniger als 0,03 Gew.-% aller Endgruppen Hydroxyendgruppen sind, C) 5 bis 94 Gew.-% Polycarbonate, D) 0 bis 50 Gew.-% faser- oder teilchenförmiger Füllstoffe und E) 0 bis 40 Gew.-% schlagzähmodifizierender Kautschuke, F) 0 bis 40 Gew.-% weiterer Additive, wobei sich die Komponenten A bis F zu 100 Gew.-% addieren, enthalten.

Mikrowellenbeständige Formkörper auf Basis amorpher oder mikrokristalliner Polyamid-Formmassen wurden bislang nicht beschrieben. Bekannt sind aber amorphe Polyamid-Formmassen für andere Anwendungen, wie beispielsweise Spritzgussformteile mit dünner Wandstärke, steife Rohre, Ummantelungen von Lichtwellenleitern, Teile von elektrischen oder elektronischen Bauteilen, Gehäuse oder Gehäusebestandteile.

EP 0469 435 A1 betrifft amorphe Copolyamide aus a) 50 Mol-% wenigstens eines cycloaliphatischen Diamins der Formel I,

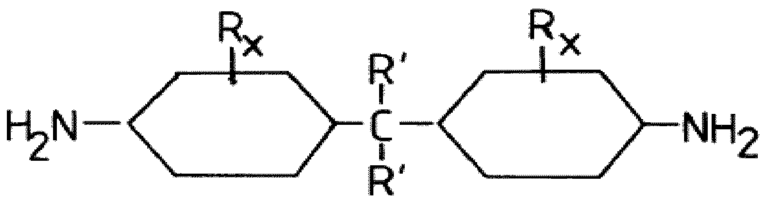

I

worin R für einen Alkylrest mit 1 bis 10 Kohlenstoffatomen steht, R' Wasserstoff oder einen Alkylrest mit 1 bis 4 Kohlenstoffatomen bedeutet und x 0 bis 4 ist, b) 5 bis 25 Mol-% einer dimerisierten Fettsäure, c) 25 bis 45 Mol-% mindestens einer aromatischen Dicarbonsäure, wobei sich die Molsumme der Komponenten a) bis c) zu 100% ergänzt, und wahlweise d) 0 bis 50 Mol-% auf Basis der Summe von a), b) und c) weiteren polyamidbildendem Monomeren. Diese Copolyamide lassen sich, vorzugsweise nach Spritzgußverfahren, leicht zur Herstellung von Formteilen verwenden, die sich durch hohe Steifigkeit und Schlagzähigkeit, durch hohe Glasumwandlungstemperatur und geringe Feuchtigkeitsaufnahme auszeichnen, insbesondere für Formteile mit dünner Wandstärke, ferner können sie durch Extrusion zu steifen Rohren oder Ummantelungen von beispielsweise Lichtwellenleitern verarbeiten werden. Im Folienbereich können sie in Kombination mit anderen Polymeren beispielsweise durch Coextrusionsverfahren verarbeitet werden.

US 4 740 377 A sieht ein Verfahren zum Erhitzen von Lebensmitteln vor, das das Erhitzen einer Lebensmittelverpackung in einem Mikrowellenofen für mindestens 2 Minuten umfasst, wobei die Lebensmittelverpackung Lebensmittel umfasst, die in einem spritzgegossenen Lebensmittelbehälter aus einem teilkristallinen Polyamid angeordnet sind, der gegebenenfalls ein verträglich gemachtes Polymer auf Olefinbasis und/oder einen Füllstoff enthält. Der Lebensmittelbehälter hat eine Wand- und Bodendicke von 1,6 mm oder weniger.

Die Aufgabe der vorliegenden Erfindung besteht in der Bereitstellung von amorphen oder mikrokristallinen Polyamid-Formmassen zur Verwendung für die Herstellung von mikrowellenbeständigen Formkörpern.

Diese Aufgabe wird gemäß dem unabhängigen Patentanspruch 1 durch Verwendung einer amorphen oder

mikrokristallinen Polyamid-Formmasse, die mindestens ein amorphes oder mikrokristallines Copolyamid (A) enthält, welches zumindest die folgenden Monomere enthält:

(a) mindestens ein cycloaliphatisches Diamin,
(b) 0,25 bis 30 Mol-% mindestens einer dimeren Fettsäure mit zumindest 28 C-Atomen und
(c) mindestens eine aromatische Dicarbonsäure,

wobei sich die Anteile aller im Copolyamid (A) enthaltenen Monomere auf 100 Mol-% ergänzen und welches eine Glasübergangstemperatur gemessen nach ISO 11357-2 und -3 (2013) von mindestens 155 °C und einen dielektrischen Verlustfaktor tan δ gemessen nach IEC 61189-2-721 (2015) von maximal $8{,}30 \times 10^{-3}$ aufweist, für die Herstellung von mikrowellenbeständigen Formkörpern, gelöst, wobei der mikrowellenbeständige Formkörper ausgewählt ist aus der Gruppe bestehend aus Geschirr, Behältern, Dosen, Schalen, Töpfen, Tassen, Bechern, Tellern, Deckeln, Saucièren, Kannen oder Abdeck-, Unterleg- oder Vorlageplatten.

Die abhängigen Ansprüche 2 bis 12 betreffen bevorzugte Ausführungsformen der erfindungsgemäßen Verwendung.

Begriffsdefinitionen

Dielektrischer Verlustfaktor

Im Sinne der vorliegenden Erfindung wird unter dem "dielektrische Verlustfaktor" (= tan δ) der komplexen relativen Permittivität (= $\underline{\varepsilon_r}$) ein Maß für die Energie verstanden, die in einem Material, das sich in einem elektrischen Wechselfeld befindet, in Wärme umgewandelt wird und damit dem Feld verloren geht.

Der "dielektrische Verlustfaktor" (= tan δ) der komplexen relativen Permittivität ($\underline{\varepsilon_r}$) ist nach IEC 60250-1 (1969) definiert als

$$\tan\delta = \varepsilon_r'' / \varepsilon_r'$$

und die komplexe relative Permittivität ($\underline{\varepsilon_r}$) als

$$\underline{\varepsilon_r} = \varepsilon_r' - j\,\varepsilon_r''.$$

Dabei steht $\varepsilon_r''$ für den Imaginärteil der komplexen relativen Permittivität $\varepsilon_r$, $\varepsilon_r'$ für den Realteil der komplexen relativen Permittivität $\varepsilon_r$ und j für die imaginäre Einheit.

Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 1874-1 (2011, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor MACM für Bis(4-amino-3-methyl-cyclohexyl)methan (auch als 3,3'-Dimethyl-4,4'-diaminodicyclohexylmethan bezeichnet, CAS-Nr. 6864-37-5), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), PACM für Bis(4-amino-cyclohexyl)methan (auch als 4,4'-Diaminodicyclohexylmethan bezeichnet, CAS-Nr. 1761-71-3), T für Terephthalsäure (CAS-Nr. 100-21-0), I für Isophthalsäure (CAS-Nr. 121-95-5), 36 für dimere Fettsäure mit 36 Kohlenstoffatomen (CAS-Nr. 68783-41-5 oder 61788-89-4), 12 für Dodecandisäure (auch 1,10-Decandicarbonsäure genannt, CAS-Nr. 693-23-2), CHD für 1,4- Cyclohexandicarbonsäure (CAS-Nr. 1076-97-7) und 12 für Laurinlactam (CAS-Nr. 947-04-6).

Amorphe oder mikrokristalline Polyamide

Amorphe oder mikrokristalline Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 50 J/g, besonders bevorzugt von maximal 25 J/g, ganz besonders bevorzugt 0 bis 22 J/g.

Mikrokristalline Polyamide sind teilkristalline Polyamide und besitzen daher einen Schmelzpunkt. Sie haben

jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 75 % beträgt, gemessen nach ASTM D 1003-13 (2013).

Bei den für die erfindungsgemäße Polyamid-Formmasse verwendeten mikrokristallinen Polyamiden beträgt der Schmelzpunkt gemessen nach ISO 11357 (2013) bevorzugt maximal 255 °C.

Amorphe Polyamide weisen, verglichen mit den mikrokristallinen Polyamiden, eine geringere Schmelzwärme auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g.

Amorphe Polyamide besitzen auf Grund ihrer Amorphizität keinen Schmelzpunkt.

Die Lichttransmission der amorphen oder mikrokristallinen Polyamide gemessen nach ASTM D 1003-13 (2013) an Platten mit einer Dicke von 2 mm beträgt mindestens 75 %, bevorzugt mindestens 80 %, besonders bevorzugt mindestens 90 %.

Copolyamid-Formmasse

Die Copolyamid-Formmasse gemäß der vorliegenden Erfindung basiert auf dem Copolyamid A und enthält dieses bevorzugt zu mindestens 90 Gew.-%. Der Begriff Copolyamid-Formmasse ist aber nicht dahingehend auszulegen, dass keine Homopolyamide in der Formmasse enthalten sein können, wobei es aber bevorzugt ist, dass die Formmasse ausschließlich Copolyamide enthält.

Dimere Fettsäure

Im Sinne der vorliegenden Erfindung weisen dimere Fettsäuren (b) zumindest 28 Kohlenstoffatome (C-Atome) auf. Sie werden durch Dimerisierung ungesättigter Monocarbonsäuren zu Dicarbonsäuren gewonnen, wobei die Dimerisierung bevorzugt katalytisch durchgeführt wird. Dimere Fettsäuren sind gemäß vorliegender Erfindung Dicarbonsäuren.

Aliphatische Dicarbonsäure

Unter den aliphatischen Dicarbonsäuren (d) im Sinne vorliegender Erfindung werden Dicarbonsäuren mit 6 bis 22 Kohlenstoffatomen verstanden. Diese können linear, verzweigt oder cycloaliphatisch sein und liegen in gesättigter Form vor.

Mengenangaben der Monomere

Die erfindungsgemässen Copolyamide enthalten nur Dicarbonsäuren und Diamine. Deren molare Mengen ergänzen sich auf 50 Mol-% für die Summe aller Diamine und 50 Mol-% für die Summe aller Dicarbonsäuren und die Summe der Diamin- und Dicarbonsäure-Mengen ergibt 100 Mol-% für das Copolyamid.

Enthalten Polyamide neben Dicarbonsäuren und Diaminen auch Lactame oder ω-Aminosäuren zu X Mol-%, so beträgt die Summe aller Diamine nur noch (50 - 0,5 X) Mol-% und Summe aller Dicarbonsäuren (50 - 0,5 X) Mol-% und die Summe der Diamin- und Dicarbonsäure-Mengen ergibt 100 Mol-% für das Copolyamid.

Bei den Mengenangaben zu den Dicarbonsäuren und Diaminen der Copolyamide gilt, dass die Summe der molaren Mengen aller Diamine im Wesentlichen gleich der Summe der molaren Mengen aller Dicarbonsäuren ist. Im Wesentlichen gleich bedeutet dabei einen maximalen Überschuss der Dicarbonsäuren oder der Diamine von 3 %, d.h. das molare Verhältnis von Dicarbonsäuren zu Diaminen beträgt 1,03 : 1 bis 1 : 1,03. Bevorzugt ist ein maximaler Überschuss der Dicarbonsäuren oder der Diamine von 2 %, d.h. das molare Verhältnis von Dicarbonsäuren zu Diaminen beträgt 1,02 : 1 bis 1 : 1,02. Der Überschuss dient zum Ausgleich von Verlusten an Monomer und/oder zur Regelung der relativen Viskosität des Polyamids und somit der Molmasse.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Copolyamiden wiederfindet.

Allgemeines zu Mengenangaben

Die Copolyamid-Formmassen gemäß der vorliegenden Erfindung enthalten bevorzugt nur die Komponenten (A) und (B), es gilt dabei die Maßgabe, dass sich die Komponenten (A) und (B) in Summe auf 100 Gew.-% ergänzen. Die festgelegten Bereiche der Mengenangaben für die einzelnen Komponenten (A) und (B) sind so zu verstehen, dass

innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (B) 100 Gew.-% ergibt.

Die Mengenangaben der im Copolypolyamid (A) enthaltenen Diamine und Dicarbonsäuren addieren sich jeweils zu 50 Mol-%. Alle im Copolypolyamid (A) enthaltenen Monomere ergänzen sich in Summe auf 100 Mol-%. Die festgelegten Bereiche der Mengenangaben für die einzelnen Monomere sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller im Copolyamid (A) enthaltenen Monomeren 100 Mol-% ergibt.

Mikrowellenbeständige Formkörper

Nach einer bevorzugten Ausführungsform der vorliegenden Erfindung besteht der mikrowellenbeständige Formkörper zu mehr als 90 Gew.-%, bevorzugt zu mehr als 95 Gew.-% und besonders bevorzugt zu mehr als 98 Gew.-% aus der mindestens einen amorphen oder mikrokristallinen Copolyamid-Formmasse.

Die übrigen Teile des Formkörpers können ganz generell aus beliebigen mikrowellenbeständigen Materialien bestehen. Bevorzugt sind diese Materialien ausgewählt aus der Gruppe bestehend aus Polyamid 1010, Polyamid 11, Polyamid 12, Schlagzähmodifikatoren, Cycloolefin-Copolymeren oder Mischungen davon. Der Formkörper kann aber auch ausschließlich aus der amorphen oder mikrokristallinen Copolyamid-Formmasse bestehen.

Eine weitere Ausführungsform vorliegender Erfindung sieht vor, dass der mikrowellenbeständige Formkörper eine Wandstärke im Bereich von 0,05 bis 5,0 mm, bevorzugt 0,1 bis 4,5 mm und besonders bevorzugt 1,0 bis 4,0 mm aufweist.

Die mikrowellenbeständigen Formkörper sind insbesondere ausgewählt aus der Gruppe bestehend aus Gegenständen wie Geschirr, Behälter, Dosen, Schalen, Töpfe, Tassen, Becher, Teller, Deckel, Saucièren, Kannen oder Abdeck-, Unterleg- oder Vorlegeplatten.

Diese Gegenstände können im Haushalt, in der Gastronomie, im Labor und/oder in der Industrie verwendet werden.

Copolyamid-Formmasse

In den folgenden bevorzugten Ausführungsformen der vorliegenden Erfindung wird die amorphe oder mikrokristalline Copolyamid-Formmasse näher präzisiert. Diese Ausführungsformen sind sowohl für den erfindungsgemäßen Formkörper als auch für die erfindungsgemäße Verwendung bevorzugt.

Das mindestens eine amorphe oder mikrokristalline Copolyamid (A) enthält zumindest die folgenden Monomere:

(a) mindestens ein cycloaliphatisches Diamin;

(b) 0,25 bis 30 Mol-% mindestens einer dimeren Fettsäure; und

(c) mindestens eine aromatische Dicarbonsäure; und gegebenenfalls

(d) mindestens eine aliphatische Dicarbonsäure.

Die mindestens eine cycloaliphatischen Diaminkomponente (a) ist gemäß einer bevorzugten Ausführungsform vorliegender Erfindung ausgewählt aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin oder 2,6-Bis-(aminomethyl)-norbornan, 1,3-Diaminocyclohexan, 1,4-Diaminocyclohexan, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus.

Gemäß einer bevorzugten Ausführungsform der vorliegenden Erfindung ist das cycloaliphatische Diamin (a) mit 40 bis 50 Mol-%, bevorzugt mit 48 bis 50 Mol-% und insbesondere bevorzugt mit genau 50 Mol-% im mindestens einen amorphen oder mikrokristallinen Copolyamid (A) enthalten.

Sofern weniger als 50 Mol-% cycloaliphatisches Diamin im Copolyamid (A) enthalten sind, wird der Diaminanteil mit 0 bis 10 Mol-% und bevorzugt mit 0 bis 2 Mol-% mindestens eines unverzweigten oder verzweigten linear aliphatischen Diamins e) auf 50 Mol-% ergänzt.

Bevorzugt werden für die Copolyamid-Formmassen amorphe Copolyamide (A) eingesetzt.

Die dimere Fettsäure (b) ist gemäß einer bevorzugten Ausführungsform der vorliegenden Erfindung eine dimeren Fettsäure mit 36 oder 44 C-Atomen, wobei die dimere Fettsäure (b) besonders bevorzugt 36 C-Atome aufweist.

Gemäß einer bevorzugten Ausführungsform der vorliegenden Erfindung ist die dimere Fettsäure (b) mit 0,5 bis 25 Mol-%, bevorzugt mit 1 bis 20 Mol-% und insbesondere bevorzugt mit 8 bis 12 Mol-% oder mit 1,5 bis 4,4 Mol-% im mindestens einen amorphen oder mikrokristallinen Copolyamid (A) enthalten.

Die dimere Fettsäure (b) des erfindungsgemäßen Copolyamids (A) weist bevorzugt eine Säurezahl im Bereich von 145-210 mg KOH/g, insbesondere bevorzugt im Bereich von 192-200 mg KOH/g auf. Ihr Gehalt an monofunktioneller Säure beträgt maximal 5 %, an bifunktioneller Säure mindestens 88 % und an trifunktioneller Säure maximal 4 %. Die Säurezahl bzw. der Gehalt der den verschiedenen Säuren wird gemessen nach AOCS Te 1a-64 bzw. AOCS Tf 5-91. In Frage kommen beispielsweise Produkte, mit 36 Kohlenstoffatomen (C-Atomen) wie sie unter dem Markennamen Pripol von Croda insbesondere Pripol 1013, 1012, 1009, 1006 oder unter dem Markennamen Empol von Cognis insbesondere Empol 1012, 1016, oder 1062 oder unter dem Markennamen Radiacid 0975 von Oleon erhältlich sind, oder Produkte mit 44 Kohlenstoffatomen beispielsweise Pripol 1004 von Croda.

Bevorzugt ist die dimere Fettsäure (b) des erfindungsgemäßen Copolyamids (A) teilweise gesättigt, besonders bevorzugt ist sie vollständig gesättigt.

Die mindestens eine aromatische Dicarbonsäure (c) ist gemäß einer bevorzugten Ausführungsform vorliegender Erfindung ausgewählt aus der Gruppe bestehend aus Isophthalsäure, Terephthalsäure, Naphthalindicarbonsäure und Mischungen daraus.

Gemäß einer bevorzugten Ausführungsform der vorliegenden Erfindung ist die mindestens eine aromatische Dicarbonsäure (c) mit 0,1 bis 49,75 Mol-%, bevorzugt mit 0,5 bis 49,5 Mol-%, besonders bevorzugt mit 10 bis 49 Mol-% und insbesondere bevorzugt mit 18 bis 42 Mol-% oder mit 38 bis 42 Mol-% oder mit 23,6 bis 36,5 Mol-% im mindestens einen amorphen oder mikrokristallinen Copolyamid (A) enthalten.

Nach einer anderen bevorzugten Ausführungsform vorliegender Erfindung ist die mindestens eine aliphatische Dicarbonsäure (d) ausgewählt aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,18-Octadecandisäure, 1,3-Cyclohexandicarbonsäure, 1,4-Cyclohexandicarbonsäure und Mischungen daraus.

Gemäß einer bevorzugten Ausführungsform der vorliegenden Erfindung ist die mindestens eine aliphatische Dicarbonsäure (d) mit 0 bis 30 Mol-%, bevorzugt mit 0 bis 25 Mol-% und insbesondere bevorzugt mit 0 bis 20 Mol-% oder mit 12 bis 22 Mol-% im mindestens einen amorphen oder mikrokristallinen Copolyamid (A) enthalten.

Nach einer weiteren bevorzugten Ausführungsform der vorliegenden Erfindung ist das Copolyamid (A) ausgewählt aus der Gruppe bestehend aus PA TMDCI/TMDCT/TMDC12/TMDC36, PA TMDCI/TMDCT/TMDC9/TMDC36, PA TMDCI/ TMDC12/TMDC36, PA TMDCI/ TMDC13/TMDC36, PA TMDCI/TMDC11/TMDC36, PA TMDCI/ TMDC12/TMDCCHD/TMDC36, PA TMDCI/TMDC36, PA TMDCI/TMDC44 und Mischungen daraus, wobei TMDC ganz oder teilweise durch MACM ersetzt sein kann.

Nach einer besonders bevorzugten Ausführungsform der vorliegenden Erfindung ist das Copolyamid (A) ausgewählt ist aus der Gruppe bestehend aus PA TMDCI/TMDCT/TMDC12/TMDC36, PA TMDCI/ TMDC12/TMDC36, PA MACMI/MACMT/MACM12/MACM36, PA MACMI/ MACM12/MACM36 und Mischungen daraus.

Nach einer weiteren besonders bevorzugten Ausführungsform der vorliegenden Erfindung ist das Copolyamid (A) ausgewählt ist aus der Gruppe bestehend aus PA MACMI/MACM36, PA TMDCI/TMDC36 und Mischungen daraus, wobei das Molverhältnis zwischen den Bausteinen MACMI und MACM36 oder TMDCI und TMDC36 bevorzugt im Bereich von 70 : 30 bis zu 95 : 5, besonders bevorzugt im Bereich von 75 : 25 bis zu 90 : 10 und insbesondere bevorzugt von 80 : 20 bis zu 85 : 15 liegt.

Eine bevorzugte Ausführungsform vorliegender Erfindung sieht vor, dass die Glasübergangstemperatur des mindestens einen amorphen oder mikrokristallinen Copolyamids (A) mindestens 170 °C, insbesondere bevorzugt mindestens 180 °C, besonders bevorzugt mindestens 190 °C und ganz besonders bevorzugt mindestens 200 °C beträgt, gemessen nach ISO 11357-2 und -3 (2013) an Granulat mit einem Wassergehalt von unter 0,1 Gew.-%.

Gemäß einer weiteren bevorzugten Ausführungsform vorliegender Erfindung beträgt der dielektrische Verlustfaktor tan $\delta$ des mindestens einen amorphen oder mikrokristallinen Copolyamids (A) maximal $8,0 \times 10^{-3}$, bevorzugt maximal $7,0 \times 10^{-3}$ und besonders bevorzugt maximal $6,5 \times 10^{-3}$.

Eine bevorzugte Ausführungsform vorliegender Erfindung sieht vor, dass die Glasübergangstemperatur der mindestens einen amorphen oder mikrokristallinen Copolyamid-Formmasse mindestens 155°C, bevorzugt mindestens 170 °C, insbesondere bevorzugt mindestens 180 °C, besonders bevorzugt mindestens 190 °C und ganz besonders bevorzugt mindestens 200 °C beträgt, gemessen nach ISO 11357-2 und -3 (2013) an Granulat mit einem Wassergehalt von unter 0,1 Gew.-%.

Gemäß einer weiteren bevorzugten Ausführungsform vorliegender Erfindung beträgt der dielektrische Verlustfaktor tan $\delta$ der mindestens einen amorphen oder mikrokristallinen Copolyamid-Formmasse (A) maximal $8,3 \times 10^{-3}$, bevorzugt maximal $8,0 \times 10^{-3}$, insbesondere bevorzugt maximal $7,0 \times 10^{-3}$ und besonders bevorzugt maximal $6,5 \times 10^{-3}$.

Eine andere bevorzugte Ausführungsform vorliegender Erfindung sieht vor, dass das mindestens eine amorphe oder mikrokristalline Copolyamid (A) zumindest die folgenden Monomere enthält:

(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin oder 2,6-Bis-(aminomethyl)-norbornan, 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus; und
(b) mindestens eine dimere Fettsäure ausgewählt aus der Gruppe bestehend aus dimeren Fettsäuren mit 36 oder 44 C-Atomen und Mischungen daraus; und
(c) mindestens eine aromatische Dicarbonsäure, ausgewählt aus der Gruppe bestehend aus Isophthalsäure, Terephthalsäure, Naphthalindicarbonsäure und Mischungen daraus; und gegebenenfalls
(d) mindestens eine aliphatische Dicarbonsäure ausgewählt aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,18-Octadecandisäure, 1,3-Cyclohexandicarbonsäure, 1,4-Cyclohexandicarbonsäure und Mischungen daraus.

Eine andere bevorzugte Ausführungsform vorliegender Erfindung sieht vor, dass das mindestens eine amorphe oder mikrokristalline Copolyamid (A) zumindest die folgenden Monomere enthält:

(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3,5-dimethyl-cyclohexyl)-methan und Mischungen daraus und bevorzugt ausgewählt ist aus der Gruppe bestehend aus Bis-(4-amino-3-methyl-cyclohexyl)-methan, Bis-(4-amino-3,5-dimethylcyclohexyl)-methan und Mischungen daraus; und
(b) mindestens eine dimeren Fettsäure mit 36 C-Atomen; und
(c) mindestens eine aromatischen Dicarbonsäure, ausgewählt aus der Gruppe bestehend aus Isophthalsäure, Terephthalsäure und Mischungen daraus; und gegebenenfalls
(d) mindestens eine aliphatischen Dicarbonsäure ausgewählt aus der Gruppe bestehend aus 1,12-Dodecandisäure, 1,14-Tetradecandisäure, 1,18-Octadecandisäure und Mischungen daraus.

Eine insbesondere bevorzugte Ausführungsform vorliegender Erfindung sieht vor, dass das mindestens eine amorphe oder mikrokristalline Copolyamid (A) zumindest die folgenden Monomere enthält:

(a) 40 bis 50 Mol-%, bevorzugt 48 bis 50 Mol-% und insbesondere bevorzugt genau 50 Mol-% mindestens eines cycloaliphatisches Diamins;
(b) 8 bis 12 Mol-% mindestens einer dimeren Fettsäure; und
(c) 18 bis 42 Mol-% mindestens einer aromatischen Dicarbonsäure;
(d) 0 bis 20 Mol-% mindestens einer aliphatischen Dicarbonsäure; wobei sich die Anteile aller im Copolyamid (A) enthaltenen Monomere auf 100 Mol-% ergänzen.

Eine andere insbesondere bevorzugte Ausführungsform vorliegender Erfindung sieht vor, dass das mindestens eine amorphe oder mikrokristalline Copolyamid (A) zumindest die folgenden Monomere enthält:

(a) 40 bis 50 Mol-%, bevorzugt 48 bis 50 Mol-% und insbesondere bevorzugt genau 50 Mol-% mindestens eines cycloaliphatischen Diamins;
(b) 1,5 bis 4,4 Mol-% mindestens einer dimeren Fettsäure; und
(c) 23,6 bis 36,5 Mol-% mindestens einer aromatischen Dicarbonsäure;
(d) 12 bis 22 Mol-% mindestens einer aliphatischen Dicarbonsäure; wobei sich die Anteile aller im Copolyamid (A) enthaltenen Monomere auf 100 Mol-% ergänzen.

Eine weitere insbesondere bevorzugte Ausführungsform vorliegender Erfindung sieht vor, dass das mindestens eine amorphe oder mikrokristalline Copolyamid (A) zumindest die folgenden Monomere enthält:

(a) 40 bis 50 Mol-%, bevorzugt 48 bis 50 Mol-% und insbesondere bevorzugt genau 50 Mol-% mindestens eines cycloaliphatisches Diamins;
(b) 8 bis 12 Mol-% mindestens einer dimeren Fettsäure; und
(c) 38 bis 42 Mol-% mindestens einer aromatischen Dicarbonsäure; wobei sich die Anteile aller im Copolyamid (A) enthaltenen Monomere auf 100 Mol-% ergänzen.

Nach einer Ausführungsform enthält das Copolyamid keine Monomere außer den Monomeren (a) bis (e).
Gemäß einer weiteren bevorzugten Ausführungsform der vorliegenden Erfindung enthält die Copolyamid-Formmasse Zusatzstoffe (B), die bevorzugt ausgewählt sind aus der Gruppe bestehend aus anorganischen und organischen Stabilisatoren, insbesondere Antioxidantien, Antiozonantien und Lichtschutzmitteln, Kondensationskatalysatoren, Kettenreglern, Gleitmitteln, Entformungsmitteln, Trennmitteln, kettenverlängernden Additiven, Farbstoffen, Markierungsmitteln, anorganischen Pigmenten, organischen Pigmenten, Entformungsmitteln, optischen Aufhellern, natürlichen Schichtsilikaten, synthetischen Schichtsilikaten, nanoskaligen Füllstoffen mit einer Partikelgrösse von maximal 100 nm.

Eine bevorzugte Copolyamid-Formmasse der vorliegenden Erfindung weist die folgende Zusammensetzung auf:

90 bis 100 Gew.-%, bevorzugt 95 bis 99,99 Gew.-% und besonders bevorzugt 98,0 bis 99,9 Gew.-% Copolyamid (A), und
0 bis 10 Gew.-%, bevorzugt 0,01 bis 5 Gew.-% und besonders bevorzugt 0,1 bis 2,0 Gew.-% Zusatzstoffe (B),
wobei sich die Komponenten (A) und (B) auf 100 Gew.-% ergänzen.

Gemäß einer anderen bevorzugten Ausführungsform der vorliegenden Erfindung beträgt die Lichttransmission des mindestens einen amorphen oder mikrokristallinen Copolyamids (A) gemessen nach ASTM D 1003-13 (2013), an einer daraus hergestellten Platte mit einer Dicke von 2 mm, noch mindestens 75 %, bevorzugt mindestens 80 % und besonders bevorzugt mindestens 90 %.

Gemäß einer anderen bevorzugten Ausführungsform der vorliegenden Erfindung beträgt die Lichttransmission der mindestens einen amorphen oder mikrokristallinen Copolyamid-Formmasse gemessen nach ASTM D 1003-13 (2013), an einer daraus hergestellten Platte mit einer Dicke von 2 mm, mindestens 75 %, bevorzugt mindestens 80 % und besonders bevorzugt mindestens 90 %.

Die relative Viskosität der amorphen oder mikrokristallinen Copolyamide (A) beträgt in einer bevorzugten Ausführungsform vorliegender Erfindung 1,34 bis 2,00, bevorzugt 1,35 bis 1,80, besonders bevorzugt 1,36 bis 1,65 oder 1,45 bis 1,80, gemessen an einer Lösung von 0,5 g Polyamid in 100 ml m-Kresol bei 20°C.

Gemäß einer anderen bevorzugten Ausführungsform der vorliegenden Erfindung weisen Formkörper aus den amorphen oder mikrokristallinen Copolyamiden (A) sehr gute mechanische Eigenschaften, insbesondere hohe Schlagzähigkeiten auf. Die nach ISO 179/2 bei 23°C bestimmte Kerbschlagzähigkeit liegt bevorzugt bei > 4 $kJ/m^2$, besonders bevorzugt bei > 8 $kJ/m^2$, insbesondere bevorzugt bei > 10 $kJ/m^2$. Die nach ISO 179/2 bei 23°C bestimmte Schlagzähigkeit liegt bevorzugt bei > 100 $kJ/m^2$, besonders bevorzugt bei > 250 $kJ/m^2$, insbesondere bevorzugt bei > 300 $kJ/m^2$.

Verwendungen amorpher oder mikrokristalliner Copolyamid-Formmassen

Die Erfindung betrifft weiterhin die Verwendung einer Copolyamid-Formmasse aus einem amorphen oder mikrokristallinen Copolyamid, wobei das mindestens eine amorphe oder mikrokristalline Copolyamid (A) zumindest die folgenden Monomere enthält:

(a) ein cycloaliphatisches Diamin,
(b) 0,25 bis 30 Mol-% mindestens einer dimeren Fettsäure und
(c) mindestens eine aromatische Dicarbonsäure, wobei

sich die Anteile aller im Copolyamid (A) enthaltenen Monomere auf 100 Mol-% ergänzen und welches eine Glasübergangstemperatur von mindestens 155 °C und einen dielektrischen Verlustfaktor tan $\delta$ von maximal $8{,}0 \times 10^{-3}$ aufweist, zur Herstellung von mikrowellenbeständigen Formkörpern.

Eine bevorzugten Ausführungsform der vorliegenden Erfindung betrifft die Verwendung der mindestens einen amorphen oder mikrokristallinen Copolyamid-Formmasse zur Herstellung von mikrowellenbeständigen Formkörpern, die zu mehr als 90 Gew.-%, bevorzugt zu mehr als 95 Gew.-% und besonders bevorzugt zu mehr als 98 Gew.-% aus dem mindestens einen amorphen oder mikrokristallinen Copolyamid bestehen.

Die übrigen Teile des Formkörpers können ganz generell aus beliebigen mikrowellenbeständigen Materialien bestehen. Bevorzugt sind diese Materialien ausgewählt aus der Gruppe bestehend aus Polyamid 1010, Polyamid 11, Polyamid 12, Schlagzähmodifikatoren, Cycloolefin-Copolymeren oder Mischungen davon. Der Formkörper kann aber auch ausschließlich aus der amorphen oder mikrokristallinen Copolyamid-Formmasse bestehen.

Die Copolyamid-Formmasse weist dabei die Merkmale wie oben angegeben auf.

Die vorliegende Erfindung betrifft die Verwendung der amorphen oder mikrokristallinen Copolyamid-Formmasse zur Herstellung mikrowellenbeständiger Formkörper, die ausgewählt sind aus der Gruppe bestehend aus Geschirr, Behälter, Dosen, Schalen, Töpfe, Tassen, Becher, Teller, Deckel, Saucièren, Kannen oder Abdeck-, Unterleg- oder Vorlegeplatten. Diese Gegenstände können im Haushalt, in der Gastronomie, im Labor und/oder in der Industrie verwendet werden.

Allgemeine Vorschrift zur Herstellung der amorphen oder mikrokristallinen Copolyamide

Die Herstellung der amorphen oder mikrokristallinen Copolyamide erfolgt auf an sich bekannte Weise zum Beispiel in handelsüblichen, rührbaren Druckautoklaven mit einem Vorlagegefäß und einem Reaktionsgefäß.

Im Vorlagegefäß wird deionisiertes Wasser vorgelegt und die Monomere und etwaige Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 260 bis 340 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2 Stunden auf atmosphärischen Druck reduziert, wobei die Temperatur leicht sinken kann. In der folgenden Entgasungsphase wird der Ansatz bei atmosphärischem Druck für 0,5 bis 2,5 Stunden auf einer Temperatur von 270 bis 340 °C gehalten. Die Polymerschmelze wird in Strangform ausgetragen, im Wasserbad bei 15 bis 80 °C abgekühlt und granuliert. Das Granulat wird bei 80 bis 120 °C unter Stickstoff oder im Vakuum auf einen Wassergehalt von weniger als 0,1 Gew.-% getrocknet.

Geeignete Katalysatoren zur Beschleunigung der Polykondensationsreaktion sind phosphorhaltige Säuren wie beispielsweise $H_3PO_2$, $H_3PO_3$, $H_3PO_4$, deren Salze oder organischen Derivate. Die Katalysatoren werden im Bereich von 0,01 bis 0,5 Gew.-%, bevorzugt 0,03 bis 0,1 Gew.-%, bezogen auf das Polyamid, zugegeben.

Geeignete Entschäumer zur Vermeidung der Schaumbildung während der Entgasung sind wässrige, 10 %-ige Emulsionen, die Silicone oder Siliconderivate enthalten und in Mengen von 0,01 bis 1,0 Gew.-%, bevorzugt 0,01 bis 0,10 Gew.-%, bezogen auf das Polyamid, eingesetzt werden.

Die Einstellung der relativen Viskosität und damit der Molmasse kann in an sich bekannter Weise, z.B. über monofunktionelle Amine oder Carbonsäuren, und/oder difunktionelle Diamine oder Dicarbonsäuren als Kettenregler erfolgen. Bevorzugte monofunktionelle Kettenregler für die erfindungsgemäßen Copolyamide sind Benzoesäure, Essigsäure, Propionsäure, Buttersäure, Valeriansäure, Capronsäure, Laurinsäure, Stearinsäure, 2-Ethylhexansäure, Cyclohexansäure, Propylamin, Butylamin, Pentylamin, Hexylamin, 2-Ethylhexylamin, n-Octylamin, n-Nonylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, Anilin oder Triacetondiamin. Die Kettenregler können einzeln oder in Kombination verwendet werden. Es können auch andere monofunktionelle Verbindungen als Kettenregler eingesetzt werden, die mit einer Amino- oder Säuregruppe reagieren können wie Anhydride, Isocyanate, Säurehalogenide, Amide oder Ester. Die übliche Einsatzmenge der monofunktionellen Kettenregler liegt bei 8 bis 200 mmol pro kg Copolyamid.

Die Glasübergangstemperatur (Tg) der amorphen oder mikrokristallinen Copolyamide (A) beträgt mindestens 155 °C, bevorzugt 170 bis 235 °C, insbesondere bevorzugt 180 bis 230 °C, besonders bevorzugt 190 bis 225 °C und ganz besonders bevorzugt 200 bis 220 °C, gemessen nach ISO 11357-2 und -3 (2013) an Granulat mit einem Wassergehalt von unter 0,1 Gew.-%.

Herstellung der mikrowellenbeständigen Formkörper

Die mikrowellenbeständigen Formkörper können über die gängigen Verarbeitungstechniken für Polyamid-Formmassen hergestellt werden. Besonders bevorzugt ist die Verarbeitung über Spritzgusstechniken.

Die Verarbeitung der amorphen oder mikrokristallinen Copolyamide im Spritzguss erfolgt auf herkömmlichen Spritzgussmaschinen mit einer Standard-3-Zonen-Schnecke bei Zylindertemperaturen von 250 bis 340 °C, wobei für den Einzug auch eine Temperatur unter 100 °C gewählt und ein vom Einzug zur Düse hin auf- und absteigendes Temperaturprofil verwendet werden kann. Die Werkzeugtemperatur wird auf 120 bis 180 °C, bevorzugt 140 bis 170 °C eingestellt.

Anhand der nachfolgenden Beispiele soll der erfindungsgemäße Gegenstand näher erläutert werden, ohne diesen auf die hier gezeigten spezifischen Ausführungsformen einschränken zu wollen.

## 1 Messmethoden

Im Rahmen dieser Anmeldung wurden die folgenden Messmethoden verwendet:

Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = $t/t_0$ erfolgte in Anlehnung an Abschnitt 11 der Norm.

Glasübergangstemperatur (Tg)

Die Bestimmung der Glasübergangstemperatur erfolgte nach ISO 11357-2 und -3 (2013) an Granulat mit einem Wassergehalt von unter 0,1 Gew.-%.

Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (Tg) wurde bei der zweiten Aufheizung bestimmt. Der Mittelpunkt des Glasübergangsbereichs, welcher als Glasübergangstemperatur (Tg) angegeben wurde, wurde nach der Methode "Half Height" ermittelt.

Lichttransmission

Die Lichttransmission wurde bei 23 °C gemäß der ASTM D 1003-13 (2013) an 60 × 60 mm Platten (Breite × Länge) mit 2 mm Dicke und Filmanguss auf einem "Haze Gard plus" der Firma Byk Gardner mit CIE Lichtart C ermittelt. Der Lichttransmissionswert wurde in % der eingestrahlten Lichtmenge angegeben.

Dielektrischer Verlustfaktor

Die Messung des dielektrischen Verlustfaktors tan $\delta$ erfolgt nach IEC 61189-2-721 (2015) an 80 × 80 × 3 mm Platten mit Filmanguss mit einem Split Post Dielectric Resonator (SPDR) der Firma QWED, Polen und der Treibersoftware Microwave Q-Meter 1.5.11 (Broschüre, inklusive Informationen zur Messung erhältlich unter www.qwed.eu). Die Messfrequenz beträgt 2,45 GHz, die Messtemperatur 23 °C.

Mikrowellenofentest

Der Mikrowellenofentest wurde an Reisschalen durchgeführt, deren Herstellung unter Punkt 3.2 beschreiben wird. Diese Reisschalen wurden 14 Tage bei 95 °C in Wasser gelagert, direkt vor dem Test entnommen, mit einem Baumwolltuch abgetrocknet und ungefüllt in der Mitte der Bodenfläche des Garraums eines Mikrowellenofens platziert. Als Mikrowellenofen wurde die Gewerbe-Mikrowelle Samsung CM1919A verwendet, welche ohne Drehteller auskommt. Die Maximalleistung des Geräts beträgt 1850 Watt. Die Betriebsfrequenz liegt bei 2,45 GHz. Der Garraum weist die Dimension 370 × 370 × 190 mm (Breite × Tiefe × Höhe) auf. Der Mikrowellenofen wurde nach dem Schlie-ßen der Tür unverzüglich gestartet, wobei die maximale Leistung von 1850 Watt verwendet wurde.

Nach Ablauf von 120 Sekunden wurde die Reisschale entnommen und visuell auf Beschädigungen wie Verzug, angeschmolzene Stellen oder Bläschenbildung, sogenannte Blistern geprüft. Es wurden jeweils fünf Schalen geprüft, trat bei nur einer der Schalen eine Beschädigung auf, wurde der Test als nicht bestanden bewertet.

Von Reisschalen aus Materialien die den 120 s Mikrowellenofen-Test bestanden haben, wurden zum Teil weitere 5 Schalen getestet, wobei die Zeit gemessen wurde bis die ersten Beschädigungen wie Verzug, angeschmolzene Stellen oder Bläschenbildung, sogenannte Blistern durch die Sichtscheibe des Mikrowellenofens erkennbar war. Angegeben wurde der arithmetische Mittelwert aus den 5 gemessenen Zeiten.

Zug-E-Modul

ISO 527 mit einer Zuggeschwindigkeit von 1 mm/min

ISO-Zugstab, Norm: ISO/CD 3167, Typ A1, 170 × 20/10 × 4 mm, Temperatur 23°C

Reißfestigkeit und Reißdehnung

Die Bestimmung von Reißfestigkeit und Reißdehnung wurden gemäß ISO 527 bei 23°C mit einer Zuggeschwindigkeit von 5 mm/min bei verstärkten Materialien an einem ISO-Zugstab, Typ A1 (Masse 170 × 20/10 × 4 mm), hergestellt gemäß der Norm ISO/CD 3167, durchgeführt.

Schlagzähigkeit nach Charpy

Die Bestimmung der Schlagzähigkeit nach Charpy wurde gemäß ISO 179/2*eU (* 2 = instrumentiert) bei 23°C an einem ISO-Prüfstab, Typ B1 (Masse 80 × 10 × 4 mm), hergestellt gemäß der Norm ISO/CD 3167, durchgeführt.

Kerbschlagzähigkeit nach Charpy

Die Bestimmung der Kerbschlagzähigkeit nach Charpy wurde gemäß ISO 179/2*eA (* 2 = instrumentiert) bei 23°C an einem ISO-Prüfstab, Typ B1 (Masse 80 × 10 × 4 mm), hergestellt gemäß der Norm ISO/CD 3167, durchgeführt.

2 Ausgangsmaterialien

Tabelle 1: In den Beispielen und Vergleichsspielen verwendete Monomere.

| Monomer | CAS-Nr. | Schmelzbereich [°C] | Handelsname | Hersteller / Lieferant |
|---|---|---|---|---|
| Bis(4-amino-3,5-dimethyl-cyclohexyl)-methan | 65962-45-0 | - | - | BASF SE, Deutschland |
| Bis(4-amino-3-methyl-cyclohexyl)-methan | 6864-37-5 | - 7 bis - 0.6* | Laromin C260 | BASF SE, Deutschland |
| dimere Fettsäure C36 | 68783-41-5 | - | Radiacid 0975 | OLEON N.V., Belgien |
| Terephthalsäure | 100-21-0 | > 400 | - | GMS - Chemie-Handelsges.m.b.H., Deutschland |
| Isophthalsäure | 121-91-5 | 345 bis 348 | - | Flint Hills Resources, Schweiz |
| 1,9-Nonandisäure | 123-99-9 | 101 bis 102 | - | Emery Oleochemicals GmbH, Deutschland |
| 1,11-Undecandisäure | 1852-04-6 | 113 bis 114 | - | Cathay Biotechnology Ltd., China |
| 1,12-Dodecandisäure | 693-23-2 | 128 bis 130 | - | Cathay Biotechnology Ltd., China |
| 1,13-Tridecandisäure | 505-52-2 | 113 bis 116 | - | Cathay Biotechnology Ltd., China |
| 1,4-Cyclohexandicarbonsäure | 1076-97-7 | 163 bis 169 | - | Eastman Chemicals Company, USA |
| Laurinlactam | 947-97-7 | 149 bis 169 | - | EMS-CHEMIE AG, Schweiz |
| * Gefrierbereich nach ASTM D1015-55. | | | | |

3 Beispiele und Vergleichsbeispiele

3.1 Herstellung des Copolyamids gemäß Beispiel 1 und 9

Im Folgenden wird die Herstellung eines erfindungsgemäßen Copolyamids an Hand des im Beispiel 1, verwendeten PA TMDCI / TMDCT / TMDC12 / TMDC36 erläutert:
Im Vorlagegefäss eines 300 l Druckautoklaven wurden 30 kg deionisiertes Wasser vorgelegt und 6,82 kg Isophthalsäure, 6,82 kg Terephthalsäure, 13,51 kg 1,12-Dodecandisäure und 3,30 kg dimere Fettsäure (Radiacid 0975 mit 36 C-Atomen) eingerührt. Danach wurden 39,54 kg Bis(4-amino-3,5-dimethylcyclohexyl)methan (TMDC), 20 g Antifoam RD 10 Gew.-% Emulsion als Entschäumer und zum Schluss 80 g Benzoesäure als Kettenregler zugegeben.
Daraufhin wurde wie folgt verfahren:

- Nach 10-maliger Inertisierung wurde bis auf 210 °C aufgeheizt. Die homogene Lösung wurde bei 210 °C durch ein Sieb in das Reaktionsgefäß gepumpt.

- Unter Rühren wurde dort der Ansatz auf 305 °C aufgeheizt und 5 Stunden bei 20 bar in der Druckphase gehalten. Innerhalb von 1,5 Stunden wurde auf atmosphärischen Druck entspannt und anschließend bei 305 °C 1 Stunden

entgast.

- Die Polymerschmelze wurde ausgetragen, im Wasserbad (20 °C) abgekühlt und granuliert. Das Granulat wurde bei 100 °C im Vakuum (30 mbar) auf einen Wassergehalt von unter 0,1 Gew.-% getrocknet.

Die relative Viskosität des Produkts betrug 1,53, die Glasübergangstemperatur 212 °C und die Lichttransmission bei 2 mm 92,9 %.

Im Folgenden wird die Herstellung eines erfindungsgemäßen Copolyamids an Hand des im Beispiel 9, verwendeten PA TMDCI / TMDC36 erläutert:
Im Vorlagegefäss eines 300 l Druckautoklaven wurden 30 kg deionisiertes Wasser vorgelegt und 18,52 kg Isophthalsäure und 14,49 kg dimere Fettsäure (Radiacid 0975 mit 36 C-Atomen) eingerührt. Danach wurden 36,99 kg Bis(4-amino-3,5-dimethyl-cyclohexyl)methan (TMDC), 20 g Antifoam RD 10 Gew.-% Emulsion als Entschäumer und zum Schluss 140 g Benzoesäure als Kettenregler zugegeben. Daraufhin wurde wie folgt verfahren:

- Nach 10-maliger Inertisierung wurde bis auf 210 °C aufgeheizt. Die homogene Lösung wurde bei 210 °C durch ein Sieb in das Reaktionsgefäß gepumpt.

- Unter Rühren wurde dort der Ansatz auf 305 °C aufgeheizt und 5 Stunden bei 20 bar in der Druckphase gehalten. Innerhalb von 1,5 Stunden wurde auf atmosphärischen Druck entspannt und anschließend bei 305 °C 1 Stunde entgast.

- Die Polymerschmelze wurde ausgetragen, im Wasserbad (20 °C) abgekühlt und granuliert. Das Granulat wurde bei 100 °C im Vakuum (30 mbar) auf einen Wassergehalt von unter 0,1 Gew.-% getrocknet.

Die relative Viskosität des Produkts betrug 1,39, die Glasübergangstemperatur 206 °C und die Lichttransmission bei 2 mm 92,8 %.

### 3.2 Herstellung der Prüfkörper

<u>Reisschalen</u>

Die Reisschalen wurden auf einer Spritzgussmaschine der Firma Ferromatik Milacron, Typ K85D-S/2F mit einer 40 mm Standard-3-Zonen-Schnecke hergestellt. Dabei wurden aufsteigende Zylindertemperaturen von 280 bis 325 °C und eine Einzugstemperatur von 40 °C eingestellt Die Werkzeugtemperatur wurde auf 160 °C eingestellt.

Die Dimensionen der rotationssymetrischen Schale (siehe Fig. 1) betragen:

| | |
|---|---|
| Innendurchmesser oben: | 113,2 mm |
| Innendurchmesser unten: | 50 mm |
| Radius: | 125 mm |
| Höhe: | 60 mm |
| Wandstärke: | 3,4 mm |

<u>Platten</u>

Die Platten 80 × 80 × 3 mm mit Filmanguss wurden auf einer Spritzgussmaschine der Firma Arburg, Modell Allrounder 420 C 1000-250 mit einer 25 mm Standard-3-Zonen-Schnecke hergestellt. Dabei wurden vom Einzug zur Düse auf- und absteigende Zylindertemperaturen von 310/320/325/325/315/305 °C verwendet. Die Werkzeugtemperatur wurde auf 160 °C eingestellt.

Die Herstellung der Platten 60 × 60 × 2 mm mit Filmanguss zur Bestimmung der Lichttransmission erfolgte wie oben beschrieben, jedoch wurde ein poliertes Werkzeug verwendet.

Die Platten wurden in trockenem Zustand verwendet; dazu wurden sie nach dem Spritzguss mindestens 48 h bei Raumtemperatur in trockener Umgebung, d.h. über Silicagel gelagert.

### 3.3 Ergebnisse

Die folgende Tabelle 2 zeigt die Beispiele 1 bis 10.

**Tabelle 2:** Beispiele.

| | | Beispiele | | | | | | | | | |
|---|---|---|---|---|---|---|---|---|---|---|---|
| **Monomere** | **Einheit** | **1** | **2** | **3** | **4** | **5** | **6** | **7** | **8** | **9** | **10** |
| TMDC | Mol-% | 50 | 50 | - | - | - | - | - | - | 50 | - |
| MACM | Mol-% | - | - | 50 | 50 | 50 | 50 | 50 | 50 | - | 50 |
| dimere Fettsäure C36 | Mol-% | 2 | 2 | 2 | 2 | 2 | 2 | 2 | 4 | 9,5 | 9,5 |
| Isopthalsäure | Mol-% | 14 | 28 | 14 | 28 | 28 | 14 | 14 | 14 | 40,5 | 40,5 |
| Terephthalsäure | Mol-% | 14 | - | 14 | - | - | 14 | - | 14 | - | - |
| 1,12-Dodecandisäure | Mol-% | 20 | - | 20 | 20 | - | - | 20 | 18 | - | - |
| 1,13-Tridecandisäure | Mol-% | - | 20 | - | - | - | - | - | - | - | - |
| 1,11-Undecandisäure | Mol-% | - | - | - | - | 20 | - | - | - | - | - |
| 1,9-Nonandisäure | Mol-% | - | - | - | - | - | 20 | - | - | - | - |
| 1,4-Cyclohexandicarbonsäure | Mol-% | - | - | - | - | - | - | 14 | - | - | - |
| **Messwerte** | | | | | | | | | | | |
| relative Viskosität (RV)* | - | 1,53 | 1,50 | 1,61 | 1,53 | 1,53 | 1,53 | 1,61 | 1,53 | 1,38 | 1,37 |
| Glasübergangstemperatur | °C | 212 | 206 | 206 | 198 | 201 | 207 | 195 | 195 | 206 | 195 |
| dielektrischer Verlustfaktor tan δ | [$10^{-3}$] | 6,45 | 6,67 | 8,15 | 7,98 | 8,15 | 7,93 | 8,11 | 7,75 | 4,38 | 6,20 |
| Lichttransmission bei 2 mm | % | 92,9 | n.b. | 92,8 | n.b. | n.b. | n.b. | 93,2 | n.b. | 92,8 | 93,3 |
| Mikrowellenofentest | 120 s | + | + | + | + | + | + | + | + | + | + |
| | s | n.v. | n.v. | 170 | n.v. | n.v. | n.v. | n.v. | n.v. | 222 | 130 |
| * RV relative Viskosität, gemessen an einer Lösung von 0.5 g Polyamid in 100 ml m-Kresol bei 20° C, + = bestanden, n.v. = nicht verfügbar (≥ 120s), n.b. = nicht bestimmt | | | | | | | | | | | |

Die folgende Tabelle 3 zeigt die Vergleichsbeispiele 11 bis 15.

**Tabelle 3:** Verleichsbeisiele.

| | | Vergleichsbeispiele | | | | |
|---|---|---|---|---|---|---|
| **Monomere** | **Einheit** | **11** | **12** | **13** | **14** | **15** |
| TMDC | Mol-% | - | - | - | - | - |
| MACM | Mol-% | 37,5 | 50 | 50 | 50 | 38 |
| dimere Fettsäure C36 | Mol-% | - | - | - | 50 | - |
| Isopthalsäure | Mol-% | 37,5 | - | 13,5 | - | 19 |
| Terephthalsäure | Mol-% | - | - | 13,5 | - | 19 |
| 1,12-Dodecandisäure | Mol-% | - | 50 | 23 | - | - |
| Laurinlactam | Mol-% | 25 | - | - | - | 24 |
| **Messwerte** | | | | | | |
| relative Viskosität (RV)* | - | 1,56 | 1,70 | 1,54 | 1,54 | 1,53 |
| Glasübergangstemperatur | °C | 213 | 155 | 204 | 76 | 194 |
| dielektrischer Verlustfaktor tan δ | [$10^{-3}$] | 8,91- | 9,26 | 8,54 | 4,50 | 10,20 |
| Lichttransmission bei 2 mm | % | 93,3- | 93,9 | 93,3 | 93,1 | 93,3 |

(fortgesetzt)

| Messwerte | | | | | | |
|---|---|---|---|---|---|---|
| Mikrowellenofentest | 120 s | nicht bestanden | nicht bestanden | nicht bestanden | ** | nicht bestanden |
| | s | - | - | - | - | - |
| * RV relative Viskosität, gemessen an einer Lösung von 0,5 g Polyamid in 100 ml m-Kresol bei 20 °C<br>** verformt sich bereits im Konditionierungsschritt (14 Tage bei 95 °C in Wasser) | | | | | | |

Die folgende Tabelle 4 zeigt die mechanischen Eigenschaften der Copolyamide der Beispiele 3, 9 und 10.

**Tabelle 4:** Mechanische Eigenschaften der Copolyamide der Beispiele 3, 9 und 10.

| | | Beispiele | | |
|---|---|---|---|---|
| **Monomere** | **Einheit** | **3** | **9** | **10** |
| TMDC | Mol-% | - | 50 | - |
| MACM | Mol-% | 50 | - | 50 |
| dimere Fettsäure C36 | Mol-% | 2 | 9,5 | 9,5 |
| Isopthalsäure | Mol-% | 14 | 40,5 | 40,5 |
| Terephthalsäure | Mol-% | 14 | - | - |
| 1,12-Dodecandisäure | Mol-% | 20 | - | - |
| **Messwerte** | | | | |
| relative Viskosität (RV)* | - | 1,61 | 1,38 | 1,37 |
| Zug-E-Modul | MPa | 2150 | 2380 | 2270 |
| Reissfestigkeit | MPa | 64 | 87 | 70 |
| Reissdehnung | % | 57 | 7 | 14 |
| Schlagzähigkeit Charpy 23 °C | $kJ/m^2$ | 342 | 105 | 312 |
| Kerbschlagzähigkeit Charpy 23 °C | $kJ/m^2$ | 11 | 5 | 5 |
| * RV relative Viskosität, gemessen an einer Lösung von 0,5 g Polyamid in 100 ml m-Kresol bei 20 °C | | | | |

## 4 Diskussion der Ergebnisse

Tabelle 2 kann entnommen werden, dass die Formkörper gemäß der erfindungsgemäßen Beispiele 1 bis 10 den Mikrowellenofentest bestanden haben. Die Formkörper gemäß der Vergleichsbeispiele 11 bis 15 hingegen, erwiesen sich, wie Tabelle 3 zeigt, für den Einsatz in Mikrowellen als nicht geeignet.

Vollkommen überraschend stellte sich heraus, dass auch Formkörper die ebenfalls auf amorphen Polyamid-Formmassen basieren, welche eine Glasübergangstemperatur von sogar mehr als 200°C (siehe Vergleichsbeispiele 11 und 13, Tabelle 3) aufweisen, also eine Glasübergangstemperatur die über der der erfindungsgemäßen Beispiele 4, 7, 8 und 10 liegt, den Mikrowellenofen-test nicht bestehen konnten. Die Formmasse, aus denen der Formkörper von Vergleichsbeispiel 13 hergestellt wurde, weist einen dielektrischen Verlustfaktor von größer als $8,30 \times 10^{-3}$ auf. Ein tiefer dielektrischer Verlustfaktor allein ist aber ebenfalls nicht ausreichend, um den Mikrowellentest zu bestehen (siehe Vergleichsbeispiel 14, dielektrischen Verlustfaktor von $4,50 \times 10^{-3}$). Nur die Formmassen mit der speziellen Merkmalskombination von Anspruch 1, d.h. eine Glasübergangstemperatur von > 155°C bei einem dielektrischen Verlustfaktor tan $\delta$ von kleiner $8,30 \times 10^{-3}$, erlauben es Formkörper herzustellen, die den Mikrowellenofentest bestehen.

## Patentansprüche

**1.** Verwendung einer amorphen oder mikrokristallinen Copolyamid-Formmasse umfassend mindestens ein amorphes

oder mikrokristallines Copolyamid (A), wobei dieses zumindest die folgenden Monomere enthält:

(a) mindestens ein cycloaliphatisches Diamin;
(b) 0,25 bis 30 Mol-% mindestens einer dimeren Fettsäure, wobei die dimere Fettsäure (b) zumindest 28 Kohlenstoffatome aufweist; und
(c) mindestens eine aromatische Dicarbonsäure; wobei sich die Anteile aller Monomere auf 100 Mol-% ergänzen und welches eine Glasübergangstemperatur gemessen nach ISO 11357-2 und -3 (2013) von mindestens 155 °C und einen dielektrischen Verlustfaktor tan $\delta$ gemessen nach IEC 61189-2-721 (2015) von maximal $8{,}30 \times 10^{-3}$ aufweist
zur Herstellung von mikrowellenbeständigen Formkörpern, wobei der mikrowellenbeständige Formkörper ausgewählt ist aus der Gruppe bestehend aus Geschirr, Behältern, Dosen, Schalen, Töpfen, Tassen, Bechern, Tellern, Deckeln, Saucièren, Kannen oder Abdeck-, Unterleg- oder Vorlageplatten.

2. Verwendung nach Anspruch 1, **dadurch gekennzeichnet, dass** die Glasübergangstemperatur des mindestens einen amorphen oder mikrokristallinen Copolyamids (A) gemessen nach ISO 11357-2 und -3 (2013) mindestens 170 °C, insbesondere bevorzugt mindestens 180 °C, besonders bevorzugt mindestens 190 °C und ganz besonders bevorzugt mindestens 200 °C beträgt.

3. Verwendung nach Anspruch 1 oder 2, **dadurch gekennzeichnet, dass** der dielektrische Verlustfaktor tan $\delta$ des mindestens einen amorphen oder mikrokristallinen Copolyamids (A) gemessen nach IEC 61189-2-721 (2015) maximal $8{,}0 \times 10^{-3}$, bevorzugt maximal $7{,}0 \times 10^{-3}$ und besonders bevorzugt maximal $6{,}5 \times 10^{-3}$ beträgt.

4. Verwendung nach einem der vorhergehenden Ansprüche, **dadurch gekennzeichnet, dass** das mindestens eine amorphe oder mikrokristalline Copolyamid (A) zumindest die folgenden Monomere enthält:

40 bis 50 Mol-%, bevorzugt 48 bis 50 Mol-% und insbesondere bevorzugt 50 Mol-% cycloaliphatisches Diamin (a); und
0,5 bis 25 Mol-%, bevorzugt 1 bis 20 Mol-%, insbesondere bevorzugt 8 bis 12 Mol-% oder 1,5 bis 4,4 Mol-% dimere Fettsäure (b); und
0,1 bis 49,75 Mol-%, bevorzugt 0,5 bis 49,5 Mol-%, besonders bevorzugt 10 bis 49 Mol-% und insbesondere bevorzugt 18 bis 42 Mol-% oder 38 bis 42 Mol-% oder 23,6 bis 36,5 Mol-% aromatische Dicarbonsäure (c); und gegebenenfalls
0 bis 30 Mol-%, bevorzugt 0 bis 25 Mol-% und insbesondere bevorzugt 0 bis 20 Mol-% oder 12 bis 22 Mol-% aliphatische Dicarbonsäure (d); wobei sich die Anteile aller Monomere auf 100 Mol-% ergänzen.

5. Verwendung nach einem der vorhergehenden Ansprüche, **dadurch gekennzeichnet, dass**
das mindestens eine amorphe oder mikrokristalline Copolyamid (A) zumindest die folgenden Monomere enthält:

(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin oder 2,6-Bis-(aminomethyl)-norbornan, 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus; und
(b) mindestens eine dimere Fettsäure ausgewählt aus der Gruppe bestehend aus dimeren Fettsäuren mit 36 oder 44 C-Atomen und Mischungen daraus; und
(c) mindestens eine aromatische Dicarbonsäure, ausgewählt aus der Gruppe bestehend aus Isophthalsäure, Terephthalsäure, Naphthalindicarbonsäure und Mischungen daraus; und gegebenenfalls
(d) mindestens eine aliphatische Dicarbonsäure ausgewählt aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,18-Octadecandisäure, 1,3-Cyclohexandicarbonsäure, 1,4-Cyclohexandicarbonsäure und Mischungen daraus.

6. Verwendung nach einem der vorhergehenden Ansprüche, **dadurch gekennzeichnet, dass**
das mindestens eine amorphe oder mikrokristalline Copolyamid (A) zumindest die folgenden Monomere enthält:

(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3,5-dimethyl-cyclohexyl)-methan und Mischungen daraus und bevorzugt ausgewählt ist aus der Gruppe bestehend aus Bis-(4-amino-3-methyl-cyclohexyl)-methan, Bis-(4-amino-3,5-dimethylcyclohexyl)-methan und Mischungen daraus; und
(b) mindestens eine dimere Fettsäuren mit 36 C-Atomen; und
(c) mindestens eine aromatischen Dicarbonsäure, ausgewählt aus der Gruppe bestehend aus Isophthalsäure, Terephthalsäure und Mischungen daraus; und gegebenenfalls
(d) mindestens eine aliphatische Dicarbonsäure ausgewählt aus der Gruppe bestehend aus 1,12-Dodecandisäure, 1,14-Tetradecandisäure, 1,18-Octadecandisäure und Mischungen daraus.

**7.** Verwendung nach einem der vorhergehenden Ansprüche, **dadurch gekennzeichnet, dass** das Copolyamid (A) ausgewählt ist aus der Gruppe bestehend aus PA TMDCI/TMDCT/TMDC12/TMDC36, PA TMDCI/TMDCT/TMDC9/TMDC36, PA TMDCI/TMDC12/TMDC36, PA TMDCI/ TMDC13/TMDC36, PA TMDCI/TMDC11/TMDC36, PA TMDCI/ TMDC12/TMDCCHD/TMDC36, PA TMDCI/TMDC36, PA TMDCI/TMDC44 und Mischungen daraus, wobei TMDC ganz oder teilweise durch MACM ersetzt sein kann.

**8.** Verwendung nach einem der vorhergehenden Ansprüche, **dadurch gekennzeichnet, dass** das mindestens eine amorphe oder mikrokristalline Copolyamid (A) als weiteres Monomer (d) mindestens eine aliphatische Dicarbonsäure mit 6 bis 22 Kohlenstoffatomen enthält.

**9.** Verwendung nach einem der vorhergehenden Ansprüche, **dadurch gekennzeichnet, dass** die Copolyamid-Formmasse Zusatzstoffe (B) enthält, die bevorzugt ausgewählt sind aus der Gruppe bestehend aus anorganischen und organischen Stabilisatoren, insbesondere Antioxidantien, Antiozonantien und Lichtschutzmitteln, Kondensationskatalysatoren, Kettenreglern, Gleitmitteln, Entformungsmitteln, Trennmitteln, kettenverlängernden Additiven, Farbstoffen, Markierungsmitteln, anorganischen Pigmenten, organischen Pigmenten, Entformungsmitteln, optischen Aufhellern, natürlichen Schichtsilikaten, synthetischen Schichtsilikaten, nanoskaligen Füllstoffen mit einer Partikelgrösse von maximal 100 nm.

**10.** Verwendung nach einem der vorhergehenden Ansprüche, **dadurch gekennzeichnet, dass** die Copolyamid-Formmasse die folgende Zusammensetzung aufweist:

90 bis 100 Gew.-%, bevorzugt 95 bis 99,99 Gew.-% und besonders bevorzugt 98,0 bis 99,9 Gew.-% Copolyamid (A), und
0 bis 10 Gew.-%, bevorzugt 0,01 bis 5 Gew.-% und besonders bevorzugt 0,1 bis 2,0 Gew.-% Zusatzstoffe (B), wobei sich die Komponenten (A) und (B) auf 100 Gew.-% ergänzen.

**11.** Verwendung nach einem der vorhergehenden Ansprüche, **dadurch gekennzeichnet, dass** die Lichttransmission des mindestens einen amorphen oder mikrokristallinen Copolyamids (A) gemessen nach ASTM D 1003-13 (2013) an einer daraus hergestellten Platte mit 2 mm Dicke mindestens 75 %, bevorzugt mindestens 80 % und besonders bevorzugt mindestens 90 % beträgt.

**12.** Verwendung nach einem der vorhergehenden Ansprüche, **dadurch gekennzeichnet, dass** der mikrowellenbeständige Formkörper eine Wandstärke im Bereich von 0,05 bis 5,0 mm, bevorzugt 0,1 bis 4,5 mm, besonders bevorzugt 1,0 bis 4,0 mm aufweist.

## Claims

**1.** Use of an amorphous or microcrystalline copolyamide moulding compound, comprising at least one amorphous or microcrystalline copolyamide (A), said copolyamide (A) comprising at least the following monomers:

(a) at least one cycloaliphatic diamine;
(b) 0.25 to 30 mol% of at least one dimeric fatty acid wherein the fatty acid (b) comprises at least 28 carbon atoms; and
(c) at least one aromatic dicarboxylic acid; where the proportions of all the monomers add up to 100 mol% and

which has a glass transition temperature measured according to ISO 11357-2 and -3 (2013) of at least 155°C and a dielectric loss factor tan $\delta$ measured according to IEC 61189-2-271 (2015) of not more than $8.30 \times 10^{-3}$ for production of microwave-resistant mouldings wherein the microwave-resistant moulding is selected from the group of dishware, vessels, containers, dishes, pots, cups, beakers, plates, lids, sauce boats, flasks or covering trays, undertrays or serving trays.

2. Use of Claim 1, **characterized in that** the glass transition temperature of the at least one amorphous or microcrystalline copolyamide (A) measured according to ISO 11357-2 and -3 (2013) is at least 170°C, especially preferably at least 180°C, more preferably at least 190°C and most preferably at least 200°C.

3. Use of claim 1 or 2, **characterized in that** the dielectric loss factor tan δ of the at least one amorphous or thermoplastic copolyamides (A) measured according to IEC 61189-2-721 (2015) is not more than $8.0 \times 10^{-3}$, preferably not more than $7.0 \times 10^{-3}$ and more preferably not more than $6.5 \times 10^{-3}$.

4. Use of any of the preceding claims, **characterized in that** the at least one amorphous or microcrystalline copolyamide (A) comprises at least the following monomers:

   40 to 50 mol%, preferably 40 to 50 mol% and especially preferably 50 mol% of cycloaliphatic diamine (a); and
   0.5 to 25 mol%, preferably 1 to 20 mol%, especially preferably 8 to 12 mol% or 1.5 to 4.4 mol% of dimeric fatty acid (b); and
   0.1 to 49.75 mol%, preferably 0.5 to 49.5 mol%, more preferably 10 to 49 mol% and especially preferably 18 to 42 mol% or 38 to 42 mol% or 23.6 to 36.5 mol% of aromatic dicarboxylic acid (c); and optionally
   0 to 30 mol%, preferably 0 to 25 mol%, especially preferably 0 to 20 mol% or 12 to 22 mol% of aliphatic dicarboxylic acid (d);
   where the proportions of all the monomers add up to 100 mol%.

5. Use of any of the preceding claims, **characterized in that** the at least one amorphous or microcrystalline copolyamide (A) contains at least the following monomers:

   (a) at least one cycloaliphatic diamine component selected from the group consisting of bis(4-amino-3-methylcyclohexyl)methane, bis(4-aminocyclohexyl)methane, bis(4-amino-3-ethylcyclohexyl)methane, bis(4-amino-3,5-dimethylcyclohexyl)methane, norbornane-2,6-diamine or 2,6-bis(aminomethyl)norbornane, 1,3-diaminocyclohexane, 1,4-diaminocyclohexane, isophoronediamine, 1,3-bis(aminomethyl)cyclohexane, 1,4-bis(aminomethyl)cyclohexane, 2,2-(4,4'-diaminodicyclohexyl)propane and mixtures thereof; and
   (b) at least one dimeric fatty acid selected from the group consisting of dimeric fatty acids having 36 or 44 carbon atoms and mixtures thereof; and
   (c) at least one aromatic dicarboxylic acid selected from the group consisting of isophthalic acid, terephthalic acid, naphthalenedicarboxylic acid and mixtures thereof; and optionally
   (d) at least one aliphatic dicarboxylic acid selected from the group consisting of hexane-1,6-dioic acid, nonane-1,9-dioic acid, decane-1,10-dioic acid, undecane-1,11-dioic acid, dodecane-1,12-dioic acid, tridecane-1,13-dioic acid, tetradecane-1,14-dioic acid, octadecane-1,18-dioic acid, cyclohexane-1,3-dicarboxylic acid, cyclohexane-1,4-dicarboxylic acid and mixtures thereof.

6. Use of any of the preceding claims, **characterized in that** the at least one amorphous or microcrystalline copolyamide (A) contains at least the following monomers:

   (a) at least one cycloaliphatic diamine component selected from the group consisting of bis(4-amino-3-methylcyclohexyl)methane, bis(4-aminocyclohexyl)methane, bis(4-amino-3,5-dimethylcyclohexyl)methane and mixtures thereof and is preferably selected from the group consisting of bis(4-amino-3-methylcyclohexyl)methane, bis(4-amino-3,5-dimethylcyclohexyl)methane and mixtures thereof; and
   (b) at least one dimeric fatty acid having 36 carbon atoms; and
   (c) at least one aromatic dicarboxylic acid selected from the group consisting of isophthalic acid, terephthalic acid and mixtures thereof; and optionally
   (d) at least one aliphatic dicarboxylic acid selected from the group consisting of dodecane-1,12-dioic acid, tetradecane-1,14-dioic acid, octadecane-1,18-dioic acid and mixtures thereof.

7. Use of any of the preceding claims, **characterized in that** the copolyamide (A) is selected from the group consisting of PA TMDCI/TMDCT/TMDC12/TMDC36, PA TMDCI/TMDCT/TMDC9/TMDC36, PA TMDCI/TMDC12/TMDC36, PA TMDCI/ TMDC13/TMDC36, PA TMDCI/TMDC11/TMDC36, PA TMDCI/ TMDC12/TMDCCHD/TMDC36, PA TMDCI/TMDC36, PA TMDCI/TMDC44 and mixtures thereof, where TMDC may be wholly or partly replaced by MACM.

**8.** Use of any of the preceding claims, **characterized in that** the at least one amorphous or microcrystalline copolyamide (A) comprises at least one aliphatic dicarboxylic acid as further monomer (d).

**9.** Use of any of the preceding claims, **characterized in that** the copolyamide moulding composition (B) comprises additives preferably selected from the group consisting of inorganic and organic stabilizers, especially antioxidants, antiozonants and light stabilizers, condensation catalysts, chain regulators, lubricants, demoulding agents, separating agents, chain-extending additives, dyes, markers, inorganic pigments, organic pigments, optical brighteners, natural sheet silicate, synthetic sheet silicate, nanoscale fillers having a maximum particle size of 100 nm.

**10.** Use of any of the preceding claims, **characterized in that** the copolyamide moulding compound has the following composition:

90% to 100% by weight, preferably 95% to 99.99% by weight and more preferably 98.0 to 99.9% by weight of copolyamide (A), and
0% to 10% by weight, preferably 0.01% to 5% by weight and more preferably 0.1 to 2.0% by weight of additives (B), where components (A) and (B) add up to 100% by weight.

**11.** Use of any of the preceding claims, **characterized in that** the light transmittance of the at least one amorphous or microcrystalline copolyamide (A) measured according to ASTM D 1003-13 (2013) on a plaque of thickness 2 mm produced therefrom is at least 75%, preferably at least 80% and more preferably at least 90%.

**12.** Use of any of the preceding claims, **characterized in that** the microwave-resistant moulding has a wall thickness in the range from 0.05 to 5.0 mm, preferably 0.1 to 4.5 mm, more preferably 1.0 to 4.0 mm.

## Revendications

**1.** Utilisation d'une matière à mouler de copolyamide amorphe ou microcristalline comprenant au moins un copolyamide amorphe ou microcristallin (A), dans laquelle celui-ci contient au moins les monomères suivants :

a) au moins une diamine cycloaliphatique ;
b) 0,25 à 30 % en moles d'au moins un acide gras dimère, dans laquelle l'acide gras dimère (b) présente au moins 28 atomes de carbone ; et
c) au moins un acide dicarboxylique aromatique ; dans laquelle les pourcentages de tous les monomères se complètent à 100 % en moles et

lequel présente une température de transition vitreuse mesurée selon la norme ISO 11357-2 et -3 (2013) d'au moins 155 °C et un facteur de perte diélectrique tan δ mesuré selon la norme IEC 61189-2-721 (2015) de 8,30 × 10-3 au maximum
pour la fabrication de corps moulés résistants aux micro-ondes,
dans laquelle le corps moulé résistant aux micro-ondes est choisi dans le groupe constitué par la vaisselle, les récipients, les boîtes, les bols, les pots, les tasses, les gobelets, les assiettes, les couvercles, les saucières, les pots ou les plaques de recouvrement, de dessous ou de présentation.

**2.** Utilisation selon la revendication 1, **caractérisée en ce que** la température de transition vitreuse du au moins un copolyamide amorphe ou microcristallin (A) mesurée selon la norme ISO 11357-2 et -3 (2013) est d'au moins 170 °C, de préférence encore d'au moins 180 °C, de manière particulièrement préférée d'au moins 190 °C et de manière tout particulièrement préférée d'au moins 200 °C.

**3.** Utilisation selon la revendication 1 ou 2, **caractérisée en ce que** le facteur de perte diélectrique tan δ du au moins un copolyamide amorphe ou microcristallin (A) mesuré selon la norme IEC 61189-2- 721 (2015) est de 8,0 × $10^{-3}$ au maximum, de préférence de 7,0 × 10-3 au maximum et de manière particulièrement préférée de 6,5 × $10^{-3}$ au maximum.

**4.** Utilisation selon l'une quelconque des revendications précédentes, **caractérisée en ce que** le au moins un copolyamide amorphe ou microcristallin (A) contient au moins les monomères suivants :

40 à 50 % en moles, de préférence 48 à 50 % en moles et de préférence encore 50 % en moles de diamine cycloaliphatique (a) ; et
0,5 à 25 % en moles, de préférence 1 à 20 % en moles, de préférence encore 8 à 12 % en moles ou 1,5 à 4,4 % en moles d'acide gras dimère (b) ; et
0,1 à 49,75 % en moles, de préférence 0,5 à 49,5 % en moles, de manière particulièrement préférée 10 à 49 % en moles et de préférence encore 18 à 42 % en moles ou 38 à 42 % en moles ou 23,6 à 36,5 % en moles d'acide dicarboxylique aromatique (c) ; et éventuellement
0 à 30 % en moles, de préférence 0 à 25 % en moles et de manière particulièrement préférée 0 à 20 % en moles ou 12 à 22 % en moles d'acide dicarboxylique aliphatique (d) ;
dans laquelle les pourcentages de tous les monomères se complètent à 100 % en moles.

**5.** Utilisation selon l'une quelconque des revendications précédentes, **caractérisée en ce que**
le au moins un copolyamide amorphe ou microcristallin (A) contient au moins les monomères suivants :

a) au moins un composant diamine cycloaliphatique choisi dans le groupe constitué par les Bis-(4-amino-3-méthyl-cyclohexyl)-méthane, Bis-(4-amino-cyclohexyl)-méthane, Bis-(4-amino-3-éthyl-cyclohexyl)-méthane, Bis-(4-amino-3,5-diméthyl-cyclohexyl)-méthane, 2,6-nor-bornanediamine ou 2,6-Bis-(aminométhyl)-norbornane, 1,3-diaminocyclohexane, 1,4-diaminocyclohexane, isophoronediamine, 1,3-Bis-(aminométhyl)cyclohexane, 1,4-Bis-(aminométhyl)cyclohexane, 2,2-(4,4'-diaminodicyclohexyl)propane et leurs mélanges ; et
b) au moins un acide gras dimère choisi dans le groupe constitué par les acides gras dimères avec 36 ou 44 atomes de C et leurs mélanges ; et
c) au moins un acide dicarboxylique aromatique choisi dans le groupe constitué par l'acide isophtalique, l'acide téréphtalique, l'acide dicarboxylique de naphtaline et leurs mélanges ; et éventuellement
d) au moins un acide dicarboxylique aliphatique choisi dans le groupe constitué par l'acide 1,6-hexanedioïque, l'acide 1,9 nonane-dioïque, l'acide 1,10-décanedioïque, l'acide 1,11 undécanedioïque, l'acide 1,12-dodécanedioïque, l'acide 1,13-tridécanedioïque, l'acide 1,14-tétradécanedioïque, l'acide 1,18-octadécanedioïque, l'acide 1,3-cyclohexanedicarboxylique, l'acide 1,4-cyclohexanedicarboxylique et leurs mélanges.

**6.** Utilisation selon l'une quelconque des revendications précédentes, **caractérisée en ce que**
le au moins un copolyamide amorphe ou microcristallin (A) contient au moins les monomères suivants :

a) au moins un composant diamine cycloaliphatique choisi dans le groupe constitué par les bis-(4-amino-3-méthyl-cyclohexyl)-méthane, bis-(4-amino-cyclohexyl)-méthane, bis-(4-amino-3,5-diméthyl-cyclo-hexyl)-méthane et leurs mélanges et est de préférence choisi dans le groupe constitué par les bis-(4-amino-3-méthyl-cyclohexyl)-méthane, bis-(4-amino-3,5-diméthyl-cyclohexyl)-méthane et leurs mélanges ; et
b) au moins un acide gras dimère avec 36 atomes de C ; et
c) au moins un acide dicarboxylique aromatique choisi dans le groupe constitué par l'acide isophtalique, l'acide téréphtalique et leurs mélanges ; et éventuellement
d) au moins un acide dicarboxylique aliphatique choisi dans le groupe constitué par l'acide 1,12-dodécanedioïque, l'acide 1,14 tétradécanedioïque, l'acide 1,18-octadécanedioïque et leurs mélanges.

**7.** Utilisation selon l'une quelconque des revendications précédentes, **caractérisée en ce que**
le copolyamide (A) est choisi dans le groupe constitué par PA TMDCI/TMDCT/TMDC12/TMDC36, PA TMDCI/TMDCT/TMDC9/TMDC36, PA TMDCI/TMDC12/TMDC36, PA TMDCI/TMDC13/TMDC36, PA TMDCI/TMDC11/TMDC36, PA TMDCI/ TMDC12/TMDCCHD/TMDC36, PA TMDCI/TMDC36, PA TMDCI/TMDC44 et leurs mélanges, dans laquelle TMDC peut être remplacé en tout ou en partie par MACM.

**8.** Utilisation selon l'une quelconque des revendications précédentes, **caractérisée en ce que**
le au moins un copolyamide amorphe ou microcristallin (A) contient comme autre monomère (d) au moins un acide dicarboxylique aliphatique avec 6 à 22 atomes de carbone.

**9.** Utilisation selon l'une quelconque des revendications précédentes, **caractérisée en ce que**
la matière à mouler en copolyamide contient des additifs (B), qui sont choisis de préférence dans le groupe constitué par des stabilisateurs inorganiques et organiques, en particulier des antioxydants, des antiozonants et des agents de protection contre la lumière, des catalyseurs de condensation, des régulateurs de chaîne, des lubrifiants, des

agents de démoulage, des agents démoulants, des additifs d'allongement de chaîne, des colorants, des agents de marquage, des pigments inorganiques, des pigments organiques, des agents de démoulage, des azurants optiques, des phyllosilicates naturels, des phyllosilicates synthétiques, des charges à l'échelle nanométrique avec une taille de particules de maximum 100 nm.

**10.** Utilisation selon l'une quelconque des revendications précédentes, **caractérisée en ce que** la matière à mouler de copolyamide présente la composition suivante :

90 à 100 % en poids, de préférence 95 à 99,99 % en poids et de manière particulièrement préférée 98,0 à 99,9 % en poids de copolyamide (A), et
0 à 10 % en poids, de préférence 0,01 à 5 % en poids et de manière particulièrement préférée 0,1 à 2,0 % en poids d'additifs (B),
dans laquelle les composants (A) et (B) se complètent à 100 % en poids.

**11.** Utilisation selon l'une quelconque des revendications précédentes, **caractérisée en ce que** la transmission lumineuse du au moins un copolyamide amorphe ou microcristallin (A) mesurée selon ASTM D 1003-13 (2013) sur une plaque de 2 mm d'épaisseur fabriquée à partir de celui-ci est d'au moins 75 %, de préférence d'au moins 80 % et de manière particulièrement préférée d'au moins 90 %.

**12.** Utilisation selon l'une quelconque des revendications précédentes, **caractérisée en ce que** le corps moulé résistant aux micro-ondes présente une épaisseur de paroi dans la plage de 0,05 à 5,0 mm, de préférence de 0,1 à 4,5 mm, de manière particulièrement préférée de 1,0 à 4,0 mm.

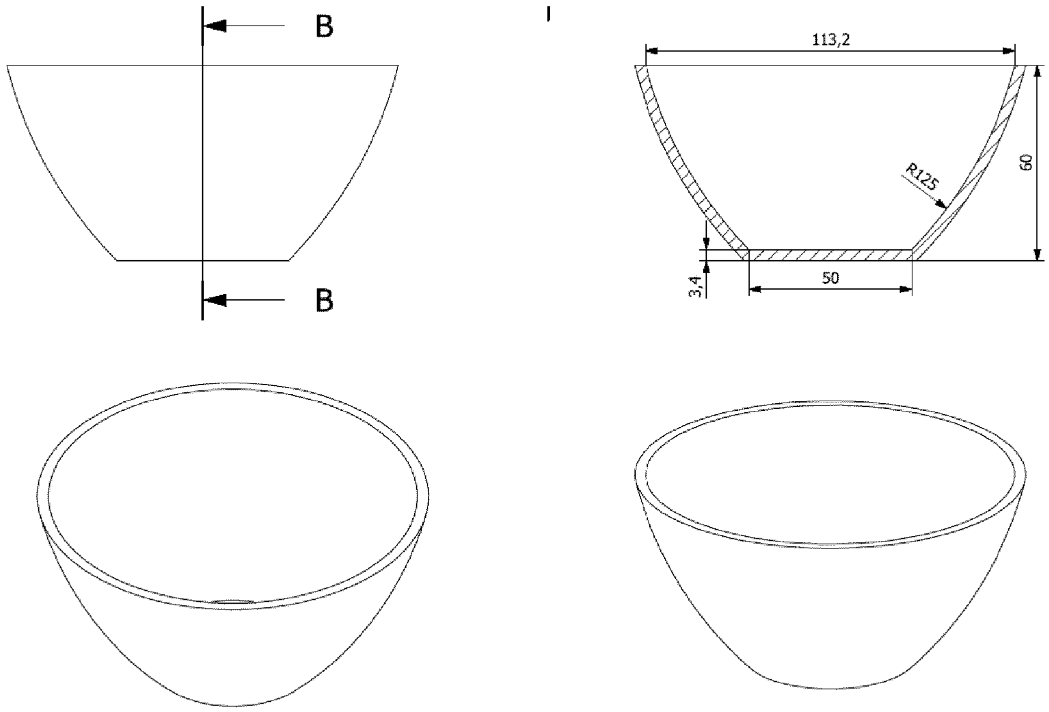


Figur 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19910948 A1
- DE 3913114 A1
- DE 4401058 A1
- EP 0469435 A1
- US 4740377 A


### In der Beschreibung aufgeführte Nicht-Patentliteratur


- *CHEMICAL ABSTRACTS,* 6864-37-5
- *CHEMICAL ABSTRACTS,* 65962-45-0
- *CHEMICAL ABSTRACTS,* 1761-71-3
- *CHEMICAL ABSTRACTS,* 100-21-0
- *CHEMICAL ABSTRACTS,* 121-95-5
- *CHEMICAL ABSTRACTS,* 68783-41-5
- *CHEMICAL ABSTRACTS,* 693-23-2
- *CHEMICAL ABSTRACTS,* 1076-97-7
- *CHEMICAL ABSTRACTS,* 947-04-6